# EUROPEAN PATENT SPECIFICATION

(11) **EP 2 738 896 B1**
(45) Date of publication and mention of the grant of the patent: **04.01.2017**
(21) Application number: 13005497.6
(22) Date of filing: 26.11.2013
(51) Int. Cl.: H02G 3/08, H02G 3/12

(54) **Box for installing and wiring electrical devices adapted to be embedded**
Box zur Installation und Verdrahtung elektrischer Geräte, die zum Einbetten angepasst sind
Boîte pour installer et câbler des dispositifs électriques adaptés pour être encastrée

(30) Priority: 28.11.2012 IT MI20122021
(43) Date of publication of application: 04.06.2014
(73) Proprietor: GEWISS S.p.A., 24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A2- 1 722 453
- DE-A1-102011 018 758
- FR-A1- 2 780 567
- NL-A- 7 711 041
- Anonymous: "Batibox Energy Boîtes cloison sèche", , 26 October 2010 (2010-10-26), XP055047669, Retrieved from the Internet: URL:http://docdif.fr.grpleg.com/general/le grand-fr/NP-FT-GT/F01033FR-01.pdf [retrieved on 2012-12-12]

## Description

The present invention relates to a box for installing and wiring electrical devices, and adapted to be embedded in a wall.

As is known, the abundant presence of electronic and electrical devices inside buildings has led, over time, to an increasingly greater complexity of the electrical system and consequently to the need to find solutions that allow to ensure higher flexibility and simplicity of installation.

In particular, with respect to the past, there is the need to install a larger number of tubes inside the walls and the tubes have a larger diameter than the tubes used in the past.

One of the main problems that installation personnel must overcome is to allow the tubes to access the inside of the connection boxes.

This is especially true in the case of so-called component boxes, intended to accommodate electrical devices such as for example switches and outlets.

Those devices are attached to the box by means of dedicated supports by means of screws which are fixed in adapted seats provided inside the boxes.

Those supports can be essentially of the modular type or of the non-modular type.

In the first case, the support is sold separately from the electrical devices, which are placed inside the support by means of coupling systems of the elastic type.

WO2008038314-A1 discloses an example of such system.

In the second case, the support is integral with the electrical device.

In both cases the system is completed by placing external plates that have an aesthetic function.

The box is therefore intended to accommodate one or more electrical devices and it is therefore necessary for multiple tubes to be able to access the box simultaneously.

The cable carrying tubes are made to circulate inside the wall, in the case of ordinary walls of the traditional type, or within the interspace in the case of light or movable walls, such as for example plasterboard walls.

The tubes therefore need to be accommodated within the box, which they normally access through inlets constituted by pre-cut sections that can be broken by the user, by means of the pressure of his fingers or by cutting by means of tools.

The tubes can in fact arrive from different directions as a function of how the electrical system has been provided and depending on the type of electrical device that is supplied.

For example, the tubes intended to supply lighting devices normally have an upward vertical path, while the ones intended to reach the power supply outlets have a vertical but downward direction.

The problem is to ensure that these tubes of the corrugated type, once arranged within the box, do not slide out.

The movement of the tubes causes the possible movement of the box, which is removed from its position due to the force applied by the tubes, that also might exit from the box.

The installation worker therefore encounters difficulties, since he has to put the box back in position, pressing with his hand and pushing the box toward the wall, with the consequent risk of breaking the rear of the box and the tubes, because of their compression against the wall.

Various systems have been studied to prevent this from happening.

As disclosed in EP1467454, the precut inlets are replaced with sleeves that guide the end part of the tube and keep it in position. The problem of such box resides in the poor versatility of the system, due to the fact that the sleeves preset in the box allow to insert the tube only in preset directions. Also, the sleeves are particularly bulky, thus causing installation problems and a limitation of the number of inlets.

WO2006094592-A discloses a different type of access of the tubes to the box, constituted by the presence of particular walls, arranged on the base of the precut region, so as to retain the tube in position once it is inserted in the box through the hole left free by the precut region. Such system, too, has the problem of being scarcely versatile because the tubes needs to be inserted by following preset directions.

EP1722453 discloses an embedded electrical box having rounded corners provided with breakable sections for the insertion of tubes. When the sections are broken, the openings are elongated and the end of the tube may move in the opening.

The aim of the present invention is to provide a box for installing and wiring electrical devices, intended to be embedded, which overcomes the drawbacks of the cited prior art.

Within the scope of this aim, an object of the invention is to provide a box that ensures facilitated placement of the tubes within the box.

A further object of the invention is to provide a box that can ensure higher versatility of installation of the tubes within the box.

A further object of the present invention is to provide a box that allows to keep the tubes in position once the box has been fixed.

A further object of the present invention is to provide a safe and reliable box.

This aim and these and other objects that will become better apparent hereinafter are achieved by a box for installing and wiring electrical devices and adapted to be embedded in a wall, comprising a box body constituted by a rear wall and by side walls that are joined to each other by means of a rounded wall and form a receptacle that is open toward the front part of said box; said box comprising a plurality of openings arranged along said walls and adapted to allow the insertion of ends of tubes adapted to accommodate conductors to be connected in said box; each of said openings being obstructed by a removable member that is associated with said box body by breakable members; said openings being arranged at an inclined region connecting said side walls and said rear wall; said box being characterized in that said removable member comprises a plate constituted by two half portions: a first half portion that is joined to a second half portion; said half portions being separated by a groove, said groove forming an easily breakable region for separating the two half portions from each other.

Further characteristics and advantages will become better apparent from the description of preferred but not exclusive embodiments of the invention, illustrated by way of nonlimiting example in the accompanying drawings, wherein:

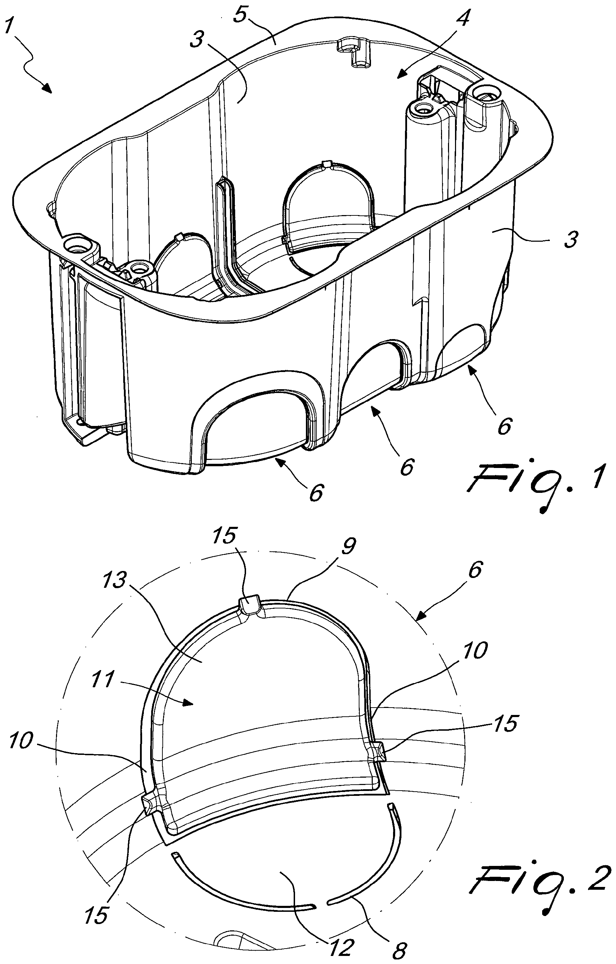

Figure 1 is a perspective view of the box in which the internal part thereof is visible;
Figure 2 is a perspective view of an internal detail of the box;

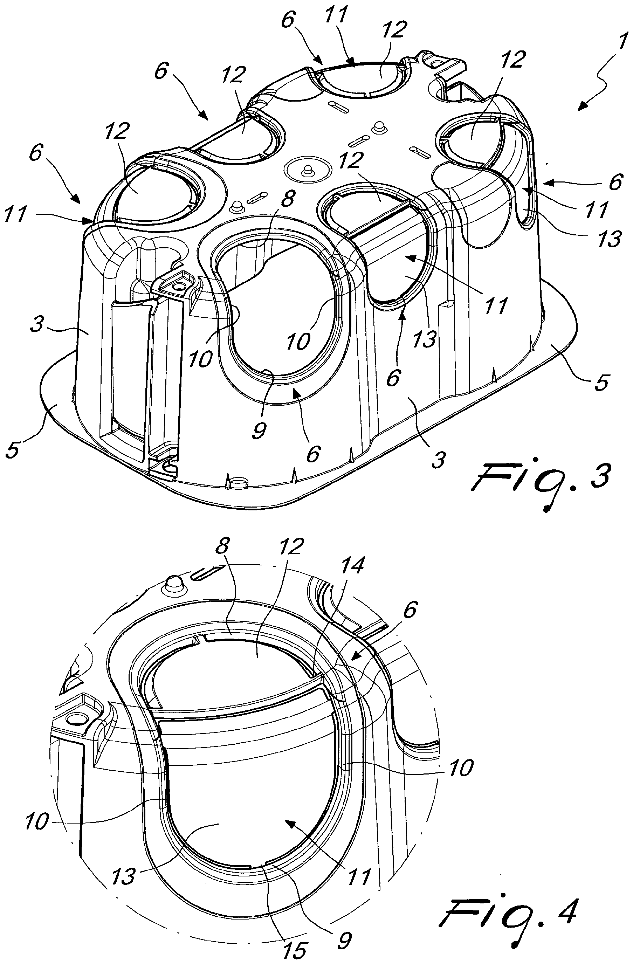

Figure 3 is a perspective view of the box, in which the external part thereof is visible;
Figure 4 is a perspective view of an external detail of the box;

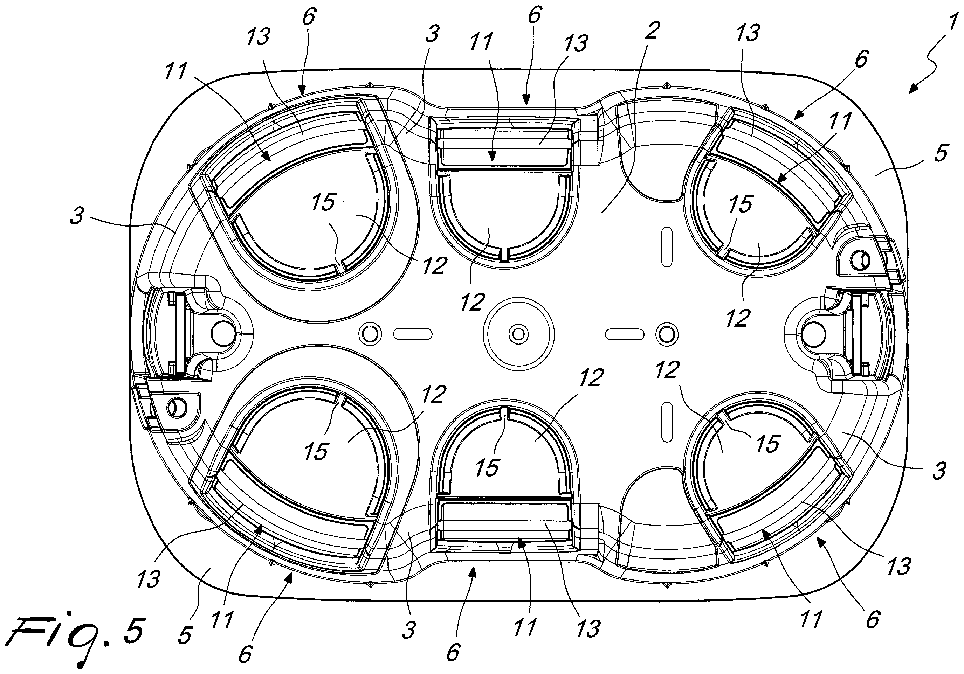

Figure 5 is a plan view of the external part of the box;
Figures 6-9 are perspective views of various examples of application of the tubes to the box.

With reference to the cited figures, the box according to the invention, generally designated by the reference numeral 1, comprises a box body constituted by a rear wall 2 and by side walls 3, that are mutually joined by means of a rounded wall to form a receptacle 4. The receptacle 4 is open toward the front part of the box and is delimited by an external flange 5 that is blended with the side walls 3.

According to the present invention, the box has a plurality of preset openings 6, having various shapes and dimensions, arranged along the walls 2 and 3 of the box body.

Each opening 6 allows the insertion of the end of a tube 7 that is adapted to accommodate electrical conductors to be connected to the inside of the box.

Each opening 6 is obstructed by a removable member 11 constituted by a contoured plate that is connected to the edges of the opening 6 by means of breakable members 15.

The openings 6 are arranged advantageously at the inclined region that joins the side walls 3 and the rear wall 2, and each opening is formed by a first semicircular edge 8, arranged in the rear wall 2, and a second semicircular edge 9, arranged in the side wall 3.

The first semicircular edge 8 is joined to the second semicircular edge 9 by two angled edges 10.

In a flat projection, the opening 6 would have a substantially oval shape.

The removable plate 11 is constituted by two half portions: a first half portion 12 which is joined to a second half portion 13, which are separated by a groove 14 that constitutes an easily breakable region for separating the two half portions from each other.

When the removable plate 11 is associated with the box body, in the position for obstructing the opening 6, the first half portion 12 is arranged at the rear wall 2 while the second half portion 13 is arranged at the side wall 3.

The breakable members 15 that join the removable plate 11 to the edges 8, 9 and 10 of the opening 6 are preferably constituted by cross-members arranged substantially in the respective centers of the semicircular edges 8 and 9 and a central position of each joining edge 10.

The receptacle 4 of the box 1 can be accessed from the rear by breaking the breakable members 15, in order to separate the plate 11 from the edges of the respective opening 6, allowing the insertion of the end of a tube 7.

The groove 14, which separates the two half portions 12 and 13 of the plate 11, allows to detach even just one of the two half portions, independently of the other.

The end of the tube 7 can then be rested against the first semicircular edge 8 or against the second semicircular edge 9, allowing to orient the tube 7 with respect to the box according to the installation requirements.

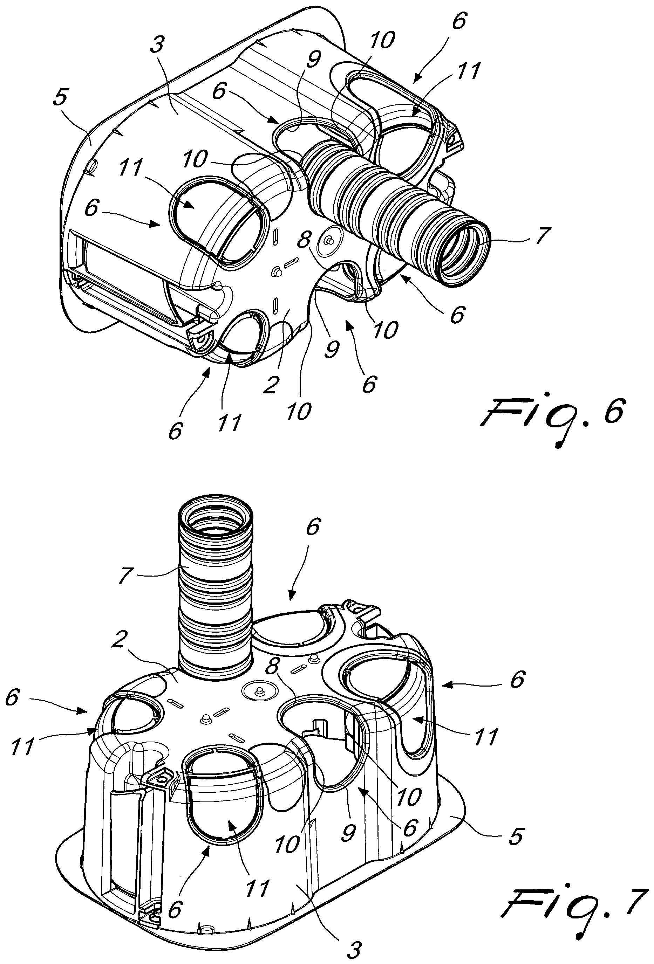

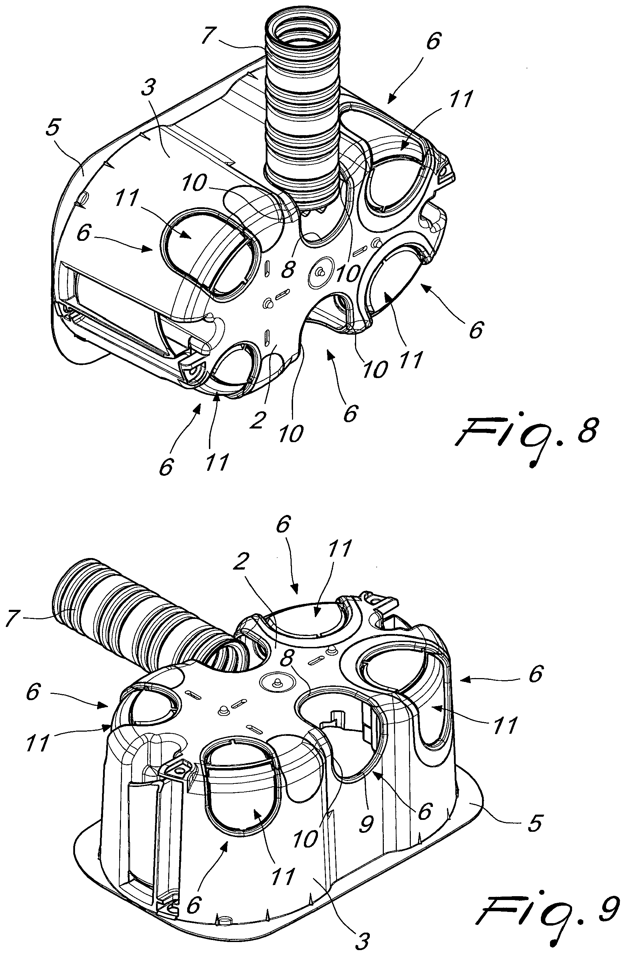

Figures 6-9 illustrate some examples of installation of the tube 7 with respect to the box 1.

The same Figures 6-9 also illustrate a variety of openings 6 having different shapes and dimensions, adapted to accommodate the ends of tubes 7 having different diameters.

Advantageously, when a plate 11 is separated from the box 1, in order to open the respective opening 6, the stubs of the cross-members 15 that remain on the edges 8, 9 and 10 of the opening constitute protrusions that interfere with the profile of a tube 7 of the corrugated type and allow to keep in position the end of the tube, preventing it from disengaging from the opening or otherwise moving from the assigned position.

In practice it has been found that the invention achieves the intended aim and objects, providing a box for installing and wiring electrical devices that is intended to be embedded and allows great versatility of use especially in relation to the types of tubes used, i.e., to their diameter and to their entry direction.

The opening 6 has a substantially slotted shape, facilitating the positioning of the end of the tube, which can enter the box with an orientation that is substantially parallel to the rear wall or perpendicular thereto, as can be seen in the examples of Figures 6-9, but also in variously angled positions with respect to the wall.

The materials used, as well as the dimensions, may be any according to the requirements and the state of the art.

## Claims

1. A box (1) for installing and wiring electrical devices and adapted to be embedded in a wall, comprising a box body constituted by a rear wall (2) and by side walls (3) that are joined to each other by means of a rounded wall and form a receptacle that is open toward the front part of said box; said box (1) comprising a plurality of openings (6) arranged along said walls and adapted to allow the insertion of ends of tubes (7) adapted to accommodate conductors to be connected in said box; each of said openings (6) being obstructed by a removable member (11) that is associated with said box body by breakable members (15); said openings (6) being arranged at an inclined region connecting said side walls and said rear wall; said box being **characterized in that** said removable member (11) comprises a plate constituted by two half portions: a first half portion (12) that is joined to a second half portion (13); said half portions being separated by a groove (14) said groove (14) forming an easily breakable region for separating the two half portions (12,13 from each other.

2. The box according to claim 1, **characterized in that** each opening (6) is formed by a first semicircular edge (8) located in said rear wall and by a second semicircular edge (9) located in said side wall.

3. The box according to claim 2, **characterized in that** said first semicircular edge (8) is connected to said second semicircular edge (9) by two angular edges.

4. The box according to claim 1, **characterized in that** each one of said openings (6) has a substantially oval plan shape.

5. The box according to claim 1, **characterized in that** when said plate is associated with said box body, in a position for obstructing said opening (6) , said first half portion (12) is arranged at said rear wall, while said second half portion (13) is arranged at said side wall.

6. The box according to claim 1, **characterized in that** said breakable members (15) comprise cross-members (15), said cross-members joining said plate to said edges of said opening and being easily breakable in order to separate said plate from said box body, thus freeing said opening.

7. The box according to claims 3 and 6, **characterized in that** said cross-members (15) are arranged substantially at the respective centers of said semicircular edges and in a central position of each of said angular edges.

8. The box according to claim 6, **characterized in that** when a plate is separated from said box (1) in order to open a respective opening (6), said cross-members leave stubs on said box body, at said opening, said stubs interfering with the end of a tube (7) and allowing to keep said end in position, preventing said tube (7) from disengaging from the opening or otherwise shifting from a set position.

9. The box according to claim 1, **characterized in that** said groove (14) allows to separate one of said half portions from said box body independently of the other half portion.

## Patentansprüche

1. Ein Kasten (1) zum Installieren und Verdrahten elektrischer Vorrichtungen, ausgebildet, um in eine Wand eingebettet zu werden, einen Kastenkörper umfassend, der aus einer Rückwand (2) und aus Seitenwänden (3) besteht, die miteinander über eine gerundete Wand verbunden sind und einen Behälter bilden, der zum offenen Teil des Kastens hin offen ist; wobei der Kasten (1) eine Vielzahl von Öffnungen (6) umfasst, die entlang den Wänden angeordnet und ausgebildet sind, um das Einführen von Enden von Röhren (7) zu ermöglichten, die ausgebildet sind, um Leiter aufzunehmen, die in dem Kasten anzuschließen sind; wobei jede der Öffnungen (6) durch ein abnehmbares Element (11) blockiert ist, das mit dem Kastenkörper durch zerbrechliche Glieder (15) verbunden ist; wobei die Öffnungen (6) an einem schrägen Bereich angeordnet sind, der die Seitenwände und die Rückwand verbindet; wobei der Kasten **dadurch gekennzeichnet ist, dass** das abnehmbare Element (11) eine Platte umfasst, die aus zwei Hälften besteht: einer ersten Hälfte (12), die mit einer zweiten Hälfte (13) verbunden ist; wobei die Hälften durch eine Nut (14) getrennt sind, wobei die Nut (14) eine Sollbruchstelle zum Trennen der beiden Hälften (12, 13) voneinander bildet.

2. Der Kasten gemäß Anspruch 1, **dadurch gekennzeichnet, dass** jede Öffnung (6) aus einer ersten halbkreisförmigen Kante (8) besteht, die sich in der Rückwand befindet, und einer zweiten halbkreisförmigen Kante (9), die sich in der Seitenwand befindet.

3. Der Kasten gemäß Anspruch 2, **dadurch gekennzeichnet, dass** die erste halbkreisförmig Kante (8) mit der zweiten halbkreisförmigen Kante (9) durch zwei winklige Kanten verbunden ist.

4. Der Kasten gemäß Anspruch 1, **dadurch gekennzeichnet, dass** jede der Öffnungen (6) einen im Wesentlichen ovalen Grundriss hat.

5. Der Kasten gemäß Anspruch 1, **dadurch gekennzeichnet, dass**, wenn die Platte mit dem Kastenkörper verbunden ist, in einer Position zum Blockieren der Öffnung (6), die erste Hälfte (12) an der Rückwand angeordnet ist, während die zweite Hälfte (13) an der Seitenwand angeordnet ist.

6. Der Kasten gemäß Anspruch 1, **dadurch gekennzeichnet, dass** die zerbrechlichen Glieder (15) Querträger (15) umfassen, wobei die Querträger die Platte mit den Kanten der Öffnung verbinden und leicht zerbrochen werden können, um die Platte von dem Kastenkörper zu trennen, somit die Öffnung freilegend.

7. Der Kasten gemäß Anspruch 3 und 6, **dadurch gekennzeichnet, dass** die Querträger (15) im Wesentlichen in den jeweiligen Zentren der halbkreisförmigen Kanten und in einer zentralen Position jeder der winkligen Kanten angeordnet sind.

8. Der Kasten gemäß Anspruch 6, **dadurch gekennzeichnet, dass**, wenn eine Platte zum Freilegen einer entsprechenden Öffnung (6) von dem Kasten (1) getrennt wird, die Querträger Stumpfe an dem Kastenkörper, an der Öffnung, hinterlassen, die das Ende eines Rohrs (7) behindern und es ermöglichen, das Ende in Position zu halten, und so das Rohr (7) daran hindern, sich aus der Öffnung zu lösen oder sich anderweitig aus einer festgelegten Position zu verschieben.

9. Der Kasten gemäß Anspruch 1, **dadurch gekennzeichnet, dass** die Nut (14) es ermöglicht, eine der Hälften unabhängig von der anderen Hälfte von dem Kastenkörper zu trennen.

## Revendications

1. Boîte (1) pour la mise en place et le câblage de dispositifs électriques et adaptée pour être encastrée dans un mur, comprenant un corps de boîte formé par une paroi arrière (2) et par des parois latérales (3) qui sont reliées les unes aux autres au moyen d'une paroi arrondie et forment un réceptacle ouvert vers la partie frontale de ladite boite; ladite boite (1) comprenant une pluralité d'ouvertures (6) disposées le long desdites parois et adaptées pour permettre l'insertion d'extrémités de tubes (7) adaptées pour recevoir des conducteurs à raccorder dans ladite boite; chacune desdites ouvertures (6) étant obstruée par un élément amovible (11) qui est associé audit corps de boite grâce à des éléments cassables (15); lesdites ouvertures (6) étant disposées dans une zone inclinée reliant lesdites parois latérales et ladite paroi arrière; ladite boite **se caractérisant en ce que** ledit élément amovible (11) comprend une plaque formée par deux moitiés: une première moitié (12) qui est reliée à une deuxième moitié (13); lesdites moitiés étant séparées par une rainure (14), ladite rainure (14) formant une zone facilement cassable pour séparer les deux moitiés (12, 13) l'une de l'autre.

2. Boîte selon la revendication 1, **caractérisée en ce que** chaque ouverture (6) est formée par un premier bord semi-circulaire (8) situé dans ladite paroi arrière et par un deuxième bord semi-circulaire (9) situé dans ladite paroi latérale.

3. Boîte selon la revendication 2, **caractérisée en ce que** ledit premier bord semi-circulaire (8) est relié audit deuxième bord semi-circulaire (9) par deux bords angulaires.

4. Boîte selon la revendication 1, **caractérisée en ce que** chacune desdites ouvertures (6) a une forme plane sensiblement ovale.

5. Boîte selon la revendication 1, **caractérisée en ce que**, lorsque ladite plaque est associée audit corps de boite, dans une position pour obstruer ladite ouverture (6), ladite première moitié (12) est disposée au niveau de ladite paroi arrière alors que ladite deuxième moitié (13) est disposée au niveau de ladite paroi latérale.

6. Boîte selon la revendication 1, **caractérisée en ce que** lesdits éléments cassables (15) comprennent des traverses (15), lesdites traverses reliant ladite plaque auxdits bords de ladite ouverture et cassant facilement afin de séparer ladite plaque dudit corps de boite en libérant ainsi ladite ouverture.

7. Boîte selon les revendications 3 et 6, **caractérisée en ce que** lesdites traverses (15) sont disposées sensiblement aux centres respectifs desdits bords semi-circulaires et dans une position centrale de chacun desdits bords angulaires.

8. Boîte selon la revendication 6, **caractérisée en ce que**, lorsqu'une plaque est séparée de ladite boîte (1) afin d'ouvrir une ouverture (6) respective, lesdites traverses laissent des tronçons sur ledit corps de boîte, au niveau de ladite ouverture, lesdits tronçons interférant avec l'extrémité d'un tube (7) et permettant de garder ladite extrémité en position, en empêchant ledit tube (7) de se dégager de l'ouverture ou sinon de se décaler par rapport à une position fixée.

9. Boîte selon la revendication 1, **caractérisée en ce que** ladite rainure (14) permet de séparer l'une desdites moitiés dudit corps de boîte indépendamment de l'autre moitié.
